# EUROPÄISCHE PATENTANMELDUNG

(11) **EP 4 280 004 A1**
(43) Veröffentlichungstag der Anmeldung: **22.11.2023**
(21) Anmeldenummer: 23173729.7
(22) Anmeldetag: 16.05.2023
(51) Int. Cl.: G05B 19/406

(54) **BETÄTIGUNGSVORRICHTUNG, SICHERHEITSSYSTEM UND VERFAHREN**

(30) Priorität: 16.05.2022 DE 102022112220
(71) Anmelder: Pilz GmbH & Co. KG, 73760 Ostfildern (DE)
(72) Erfinder: Schlecht, Michael, 73760 Ostfildern (DE)
(74) Vertreter: Witte, Weller & Partner Patentanwälte mbB

(57) **Zusammenfassung**

Die vorliegende Erfindung betrifft eine Betätigungsvorrichtung (10) für eine Sicherheitssteuerung (52) zum Überführen einer Anlage (58) in einen sicheren Zustand in Reaktion auf eine Betätigung eines Betätigungselements (12) der Betätigungsvorrichtung (10), wobei die Betätigungsvorrichtung (10) das Betätigungselement (12) und eine Betätigungserfassungseinrichtung (14) zum Erfassen einer Betätigung des Betätigungselements (12) aufweist, wobei sich das Betätigungselement (12) in einer Längsrichtung (30) erstreckt, wobei die Betätigungsvorrichtung (10) des Weiteren eine Betätigungsortbestimmungseinrichtung (16) zum Bestimmen eines Betätigungsorts der erfassten Betätigung entlang der Längsrichtung (30) aufweist, wobei die Betätigungsortbestimmungseinrichtung (16) eine Signalerzeugungseinheit (22) zum Erzeugen eines Signals auf dem Betätigungselement (12) entlang der Längsrichtung (30), eine Signalerfassungseinheit (24) zum Erfassen des erzeugten Signals während der Betätigung, und eine Verarbeitungseinheit (26) aufweist, wobei die Verarbeitungseinheit (26) dazu eingerichtet ist, eine Signalcharakteristik des erfassten Signals zu bestimmen und den Betätigungsort basierend auf der bestimmten Signalcharakteristik zu bestimmen. Des Weiteren betrifft die vorliegende Erfindung ein Sicherheitssystem (50) zur Sicherung einer Anlage (58). Des Weiteren betrifft die vorliegende Erfindung ein Verfahren (70) zur Sicherung einer Anlage (58).

## Beschreibung

Die vorliegende Erfindung betrifft eine Betätigungsvorrichtung für eine Sicherheitssteuerung zum Überführen einer Anlage in einen sicheren Zustand in Reaktion auf eine Betätigung eines Betätigungselements der Betätigungsvorrichtung, wobei die Betätigungsvorrichtung das Betätigungselement und eine Betätigungserfassungseinrichtung zum Erfassen einer Betätigung des Betätigungselements aufweist, wobei sich das Betätigungselement in einer Längsrichtung erstreckt. Des Weiteren betrifft die vorliegende Erfindung ein Sicherheitssystem zur Sicherung einer Anlage. Des Weiteren betrifft die vorliegende Erfindung ein Verfahren zur Sicherung einer Anlage.

Eine Anlage kann grundsätzlich eine oder mehrere Apparate, Geräte und/oder Maschinen umfassen. Insbesondere ist eine Anlage eine planvolle und systematische Zusammenstellung von einem oder mehreren Apparaten, Geräten und/oder Maschinen. Die Apparate, Geräte und/oder Maschinen können in räumlichem Zusammenhang stehen und funktional, steuerungstechnisch oder sicherheitstechnisch miteinander verbunden sein.

Zur Sicherung einer solchen Anlage ist es bekannt ein Sicherheitssystem mit einer Sicherheitssteuerung zu verwenden. Eine Sicherheitssteuerung kann eine Steuerungseinrichtung sein. Die Sicherheitssteuerung kann dazu eingerichtet sein, unter bestimmten Voraussetzungen (wie beispielweise in einem Gefahrenfall) die Anlage in einen sicheren Zustand zu überführen. Beispielsweise kann die Sicherheitssteuerung dazu eingerichtet sein, im Gefahrenfall Funktionsprozesse der Anlage, insbesondere einen Teil der Anlage oder die gesamte Anlage, abzuschalten. Ein Sicherheitssystem mit einer Sicherheitssteuerung kann in diesem Fall auch als Not-Halt-System bezeichnet werden.

Im Stand der Technik sind verschiedene Mittel bekannt, mittels denen der Sicherheitssteuerung signalisiert werden kann, dass die Anlage in einen sicheren Zustand überführen werden soll. Zum einen ist es bekannt, Sensoren einzusetzen, die den Zustand zumindest eines Teils der Anlage oder den Zugang zu einem Teil der Anlage überwachen. In einem Gefahrenfall übermittelt der Sensor entsprechende Sensordaten an die Sicherheitssteuerung, so dass die Sicherheitssteuerung das Vorliegen eines Gefahrenfalls erkennen kann. Beispielsweise können Sensoren dazu verwendet werden, Fremdkörper in einer Maschine zu erkennen, so dass die Sicherheitssteuerung bei Erkennung eines Fremdkörpers die Maschine abschalten kann. Zum anderen ist es auch bekannt, Betätigungsvorrichtungen einzusetzen, die der Sicherheitssteuerung bei manueller Betätigung der Betätigungsvorrichtung signalisieren, dass die Anlage in einen sicheren Zustand zu überführen ist. Die manuelle Betätigung kann beispielsweise in einem Gefahrenfall erfolgen. In Reaktion auf die manuelle Betätigung der Betätigungsvorrichtung kann die Sicherheitssteuerung dann zumindest einen Teil der Anlage in einen sicheren Zustand überführen, insbesondere diesen abschalten. Solche Betätigungsvorrichtungen können daher insbesondere auch als Not-Halt-Schalter bezeichnet werden.

Eine derartige Betätigungsvorrichtung hat ein Betätigungselement, welches manuell, sprich von einer Person, betätigt werden kann. Das Betätigungselement kann auch als Auslöseelement oder Auslöser bezeichnet werden, da bei Betätigung das Überführen der Anlage in einen sicheren Zustand, insbesondere der Not-Halt, ausgelöst wird. Die Betätigung kann beispielsweise eine Berührung oder eine Bewegung des Betätigungselements sein.

Um die Betätigung des Betätigungselements erkennen bzw. erfassen zu können, können Betätigungsvorrichtungen eine Betätigungserfassungseinrichtung aufweisen. Diese kann vorzugsweise eine Bewegung, beispielsweise ein Drücken oder Ziehen, des Betätigungselements in einer bestimmten Richtung erkennen.

Derartige Betätigungsvorrichtungen können beispielsweise als Taster oder als Seilzugschalter realisiert sein. Taster haben eine Taste als Betätigungselement. Seilzugschalter haben einen Seilzug als Betätigungselement. Ein Seilzug ist insbesondere ein Betätigungselement, dass sich über eine Länge in einer Längsrichtung erstreckt. Es ist beispielsweise bekannt, in Anlagen Seilzugschalter mit Seilzügen mit einer Länge von 50 m, 100 m oder mehr zu verwenden. Ein Beispiel für einen derartigen Seilzugschalter ist der Seilzugschalter "PSENrope" von Pilz GmbH & Co. KG. Ein Seilzugschalter hat gegenüber einem Taster den Vorteil, dass die Betätigung nicht an einer einzigen Position, nämlich an der Position des Tasters, sondern an einer beliebigen Position entlang des Seilzugs in der Längsrichtung erfolgen kann. Ein Seilzugschalter ist somit im Gefahrenfall für einen Benutzer in der Regel besser, insbesondere schneller, erreichbar als ein Taster. Betätigungselemente wie beispielsweise Seilzugschalter, die sich in einer Längsrichtung erstrecken, ermöglichen somit eine Betätigung an einem beliebigen Betätigungsort an dem Betätigungselement in der Längsrichtung.

Nachdem die Anlage nach Betätigung einer Betätigungsvorrichtung mittels der Sicherheitssteuerung in einen sicheren Zustand überführt worden ist, insbesondere abgeschaltet worden ist, wird bei Sicherheitssystemen an Anlagen eine Diagnose benötigt bzw. durchgeführt. Insbesondere wird bei Sicherheitssystemen, insbesondere bei weit verzweigten Not-Halt-Systemen mit Sicherheitseinrichtungen, oft eine Diagnose benötigt, wo und welches Sicherheitsbauteil (insbesondere welche Betätigungsvorrichtung bzw. Sensor) ausgelöst hat. Bei klassischen Not Halt Einrichtungen wird dies über einen Hilfskontakt ermöglicht, der zur Diagnose an ein übergeordnetes System weitergeleitet wird. Bei Teilnehmern an Bussystemen wird dies über Diagnosedaten realisiert. Ziel der Diagnose soll sein den Auslöser zu lokalisieren. Besonders bei Systemen die über weite, nicht einsehbare Bereiche gehen, ist eine Diagnose sehr hilfreich.

Bisherige Betätigungsvorrichtungen wie Seilzugschalter, die ein Betätigungselement (wie beispielsweise einen Seilzug) aufweisen, das sich in einer Längsrichtung erstreckt, erlauben keine genaue Bestimmung des Betätigungsorts. Wenn die Betätigungsvorrichtungen betätigt wird, ist zur Diagnose nur die Information vorhanden, dass diese Betätigungsvorrichtungen betätigt bzw. ausgelöst wurde und ggf. noch, wo die Betätigungsvorrichtung in der Anlage angeordnet ist. Die Diagnose erstreckt sich somit auf den gesamten Bereich der Anlage, in dem die Betätigungsvorrichtung angeordnet ist, insbesondere auf den Bereich, in dem das Betätigungselement (beispielsweise der Seilzug) angeordnet ist bzw. über den sich das Betätigungselement in der Anlage erstreckt.

Vor diesem Hintergrund ist es eine Aufgabe der vorliegenden Erfindung eine verbesserte Betätigungsvorrichtung sowie ein verbessertes Sicherheitssystem und ein verbessertes Verfahren zur Absicherung einer Anlage bereitzustellen. Insbesondere ist es eine Aufgabe der vorliegenden Erfindung, eine schnellere und bessere Diagnose nach Betätigung eines Betätigungselements einer Betätigungsvorrichtung zu ermöglichen.

Gemäß einem ersten Aspekt der vorliegenden Erfindung wird die eingangs beschriebene Betätigungsvorrichtung dahingehend weitergebildet, dass die Betätigungsvorrichtung des Weiteren eine Betätigungsortbestimmungseinrichtung zum Bestimmen eines Betätigungsorts der erfassten Betätigung in der Längsrichtung aufweist, wobei die Betätigungsortbestimmungseinrichtung eine Signalerzeugungseinheit zum Erzeugen eines Signals auf dem Betätigungselement entlang der Längsrichtung, eine Signalerfassungseinheit zum Erfassen des erzeugten Signals während der Betätigung, und eine Verarbeitungseinheit aufweist, wobei die Verarbeitungseinheit dazu eingerichtet ist, eine Signalcharakteristik des erfassten Signals zu bestimmen und den Betätigungsort basierend auf der bestimmten Signalcharakteristik zu bestimmen.

Gemäß einem zweiten Aspekt wird ein Sicherheitssystem zur Sicherung einer Anlage vorgeschlagen, wobei das Sicherheitssystem eine Betätigungsvorrichtung nach dem ersten Aspekt und eine Sicherheitssteuerung zum Überführen der Anlage in einen sicheren Zustand in Reaktion auf eine Betätigung des Betätigungselements der Betätigungsvorrichtung aufweist.

Gemäß einem dritten Aspekt wird ein Verfahren zur Sicherung einer Anlage, wobei das Verfahren die folgenden Schritte aufweist:
- Erfassen einer Betätigung eines Betätigungselements mittels einer Betätigungserfassungseinrichtung, wobei sich das Betätigungselement in einer Längsrichtung erstreckt;
- Bestimmen eines Betätigungsorts der erfassten Betätigung in der Längsrichtung mittels einer Betätigungsortbestimmungseinrichtung, wobei eine Signalerzeugungseinheit der Betätigungsortbestimmungseinrichtung ein Signal auf dem Betätigungselement entlang der Längsrichtung erzeugt, wobei eine Signalerfassungseinheit der Betätigungsortbestimmungseinrichtung das erzeugten Signal während der Betätigung erfasst, wobei eine Verarbeitungseinheit der Betätigungsortbestimmungseinrichtung eine Signalcharakteristik des erfassten Signals bestimmt und den Betätigungsort basierend auf der bestimmten Signalcharakteristik bestimmt; und
- Überführen der Anlage mittels einer Sicherheitssteuerung in einen sicheren Zustand in Reaktion auf eine Betätigung des Betätigungselements.

Wie eingangs bereits erläutert, ermöglichen Betätigungselemente, wie beispielsweise Seilzugschalter, die sich in einer Längsrichtung erstrecken, eine Betätigung an einem beliebigen Betätigungsort an dem Betätigungselement in der Längsrichtung. Derartige Betätigungselemente beschränken sich nicht nur auf Seilzüge. Grundsätzlich ist jeder Körper, der sich in einer Längsrichtung über eine gewisse Länge erstreckt und eine Betätigung an einem beliebigen Betätigungsort entlang der Längsrichtung erlaubt, als Betätigungselement hierzu geeignet. Beispielsweise können auch Körper wie Stangen oder Stäbe als derartige Betätigungselemente verwendet werden.

Die der Erfindung zugrundeliegende Idee besteht darin, bei der manuellen Betätigung des Betätigungselements auch den Betätigungsort an dem Betätigungselement in der Längsrichtung zu bestimmen. Dazu weist die Betätigungsvorrichtung zusätzlich eine Betätigungsortbestimmungseinrichtung auf. Die Betätigungsortbestimmungseinrichtung ist dazu eingerichtet, den Betätigungsort der erfassten Betätigung in der Längsrichtung zu bestimmen. Der Betätigungsort ist der Ort, an dem der Benutzer zur manuellen Betätigung das Betätigungselement berührt bzw. greift. Der Betätigungsort kann auch als Auslösestelle oder Auslöseort bezeichnet werden.

Die Betätigungsortbestimmungseinrichtung weist zur Bestimmung des Betätigungsorts eine Signalerzeugungseinheit, eine Signalerfassungseinheit, und eine Verarbeitungseinheit auf.

Die Verarbeitungseinheit kann mit einem nichtflüchtigen Datenspeicher, in dem ein Computerprogramm gespeichert ist, verbunden sein oder diesen aufweisen. Die Verarbeitungseinheit kann zum Beispiel ein Mehrzweckcomputer, wie etwa ein handelsüblicher Personal Computer, der unter Windows^{®}, Linux oder MacOS läuft, und das Computerprogramm aus dem Speicher weist einen Programmcode auf, der zum Implementieren von bestimmten Funktionen und Operationen der Verarbeitungseinheit gestaltet und ausgebildet ist. Alternativ kann die Verarbeitungseinheit auch ein logischer Schaltkreis sein, wie etwa ein vor Ort programmierbares Gate-Array (FPGA: Field Programmable Gate Array), ein anwendungsspezifischer integrierter Schaltkreis (ASIC: Application-Specific Integrated Circuit), ein Mikrocontroller oder ein beliebiger anderer angemessener programmierbarer elektrischer Schaltkreis. Zum Implementieren von Funktionen und Operationen der Verarbeitungseinheit kann eine beliebige angemessene Programmiersprache oder Hardwarebeschreibungssprache verwendet werden, wie etwa C, VHDL und dergleichen.

Das Betätigungselement hat ein erstes Längsende und ein zweites Längsende. Das erste und zweite Längsende sind in der Längsrichtung auf entgegengesetzten Seiten des Betätigungselements angeordnet. Die Betätigungserfassungseinrichtung kann an dem ersten Längsende des Betätigungselements angeordnet sein. Die Betätigungsortbestimmungseinrichtung kann an dem ersten und/oder an dem zweiten Längsende des Betätigungselements angeordnet sein. Mit anderen Worten können die Einheiten der Betätigungsortbestimmungseinrichtung gemeinsam an einem der beiden Längsenden angeordnet sein. Alternativ können die Einheiten auch auf beide Längsenden aufgeteilt werden. Beispielsweise kann die Signalerzeugungseinheit an einem der beiden Längsenden (beispielsweise dem zweiten Längsende) angeordnet sein und die restlichen Einheiten der Betätigungsortbestimmungseinrichtung, insbesondere die Signalerfassungseinheit, können an dem anderen Längsende (beispielsweise dem ersten Längsende) angeordnet sein.

Die Signalerzeugungseinheit ist dazu eingerichtet, ein (elektrischen oder mechanischen) Signal auf dem Betätigungselement in der Längsrichtung zu erzeugen. Mit anderen Worten kann die Signalerzeugungseinheit das Signal entlang des Betätigungselement senden. Die Signalerzeugungseinheit kann somit auch als Sender des Signals bezeichnet werden. Das Signal kann eine Schwingung, insbesondere eine (stehende) Welle, sein, die entlang der Längsrichtung des Betätigungselements verläuft. Das Signal kann sich insbesondere auch aus mehreren Schwingungen zusammensetzen. Unter "Erzeugen" kann insbesondere verstanden werden, dass das Betätigungselement in der Längsrichtung mit einer Schwingung beaufschlagt wird bzw. dass das Betätigungselement zu der Schwingung angeregt wird.

Das Signal kann von der Signalerzeugungseinheit fortlaufend, insbesondere periodisch oder in bestimmten Zeitintervallen, oder zu bestimmten Zeitpunkten erzeugt werden. Beispielsweise kann das Signal kontinuierlich erzeugt werden.

Alternativ kann das Signal auch direkt in Reaktion auf eine erfasste Betätigung erzeugt werden, sprich wenn die Betätigungserfassungseinrichtung eine Betätigung erfasst hat. Dies ist vorteilhaft, da in diesem Fall nur dann eine Diagnose (eine Bestimmung des Betätigungsorts) erfolgt, wenn eine Betätigung mechanisch erfasst wurde. Dadurch wird eine ungewollte Auslösung der Diagnose unterbunden

Die Signalerfassungseinheit ist dazu eingerichtet, das erzeugte Signal während der Betätigung zu erfassen. Die Signalerfassungseinheit kann dazu beispielsweise einen Sensor aufweisen, der das Signal erfassen, sprich messen oder empfangen, kann. Die Signalerfassungseinheit kann somit auch als Empfänger des Signals bezeichnet werden. Die Signalerfassungseinheit erfasst insbesondere das Signal direkt in Reaktion auf das Erfassen einer Betätigung mittels der Betätigungserfassungseinrichtung, sprich wenn die Betätigungserfassungseinrichtung eine Betätigung erfasst hat und das Signal mittels der Signalerzeugungseinheit erzeugt worden ist.

Wenn bei der manuellen Betätigung eine Person das Betätigungselement berührt oder greift, ändert sich das Signal bzw. die Schwingung. Insbesondere können sich durch das Berühren des Betätigungselements Frequenz(en) und/oder Amplitude(n) der Schwingung(en) des Signals ändern. Insbesondere kann diese Schwingung(en) durch das Berühren bei der Betätigung verstimmt werden. Dies ist vergleichbar mit dem Verstimmen einer Gitarrensaite, wenn der Benutzer die Gitarrensaite anschlägt (sprich zur Schwingung anregt) und die Gitarrensaite an einer Stelle des Griffbretts berührt oder greift, insbesondere gegen das Griffbrett drückt. Allgemein gesprochen ändert sich beim Betätigen somit das Signalverhalten, sprich eine Signalcharakteristik, des Signals, wie beispielsweise die Frequenz(en) und/oder die Amplitude(n) der Schwingung(en) des Signals. Diese Änderung kann als Signalveränderung des Signals bezeichnet werden. Wie sich das Signal, sprich die Signalcharakteristik, ändert, ist abhängig von dem Betätigungsort an dem Betätigungselement in der Längsrichtung. Die Signalcharakteristik variiert somit mit dem Betätigungsort. Insbesondere variiert die Signalcharakteristik, insbesondere Frequenz und/oder Amplitude einer Schwingung, in Abhängigkeit des Betätigungsorts entlang der Längsrichtung. Mit anderen Worten ist die Signalcharakteristik betätigungsortspezifisch. Dies ist wiederum vergleichbar mit einer Gitarrensaite, die unterschiedlich verstimmt wird, wenn sie an unterschiedlichen Stellen (Bünden) des Griffbretts gegriffen wird.

Die vorliegende Erfindung macht sich diesen technischen Zusammenhang zwischen Signalcharakteristik und Betätigungsort zu Nutze. Weil die Signalerfassungseinheit das Signal während der Betätigung erfasst, wird dabei das durch die Betätigung veränderte Signal erfasst. Das erfasste Signal wird dann mittels der Verarbeitungseinheit verarbeitet, mit dem Ziel den Betätigungsort zu bestimmen. Die Verarbeitungseinheit bestimmt zunächst eine Signalcharakteristik des erfassten Signals. Basierend auf der bestimmten Signalcharakteristik bestimmt die Verarbeitungseinheit dann den Betätigungsort. Dies ist möglich, weil die Signalcharakteristik betätigungsortspezifisch ist. Mit anderen Worten kann jedem Betätigungsort eine entsprechende Signalcharakteristik zugeordnet werden. Durch Kenntnis dieser Zuordnung kann auf Basis der bestimmten Signalcharakteristik während der Betätigung auf den Betätigungsort rückgeschlossen werden.

Die Erfindung zeichnet sich somit dadurch aus, dass Mittel bereitgestellt werden, mittels denen der Betätigungsort an dem Betätigungselement entlang der Längsrichtung bestimmt werden kann. Die Kenntnis des Betätigungsorts erlaubt dann eine bessere Lokalisierung des Auslösers. Dadurch wird eine schnellere und genauere Diagnose hinsichtlich des Auslösers und der Ursache für die Betätigung ermöglicht. Insbesondere kann die Diagnose auf einen Teil der Anlage, in dem der bestimmte Betätigungsort liegt, beschränkt werden. Auf diese Weise können Stillstandzeiten verkürzt werden und ein kurzer Wiederanlauf der Anlage erreicht werden. Dadurch wird die Produktivität hochgehalten und die Effizienz gesteigert.

Derartige Sicherheitssysteme (beispielsweise seilgeführte Not Halt Systeme wie z.B. PSENrope) sind teilweise über längere Strecken (50 Meter / 100 Meter oder mehr) in Anlagen verteilt. Eine Lokalisierung der genauen Auslösestelle kann dabei helfen, wenn das Personal sich in einer gefährlichen Situation befindet. Eine schnelle und treffsichere Lokalisierung der Auslösung macht es einfacher den Zugang zur Gefahrenstelle, Rettungswege sowie Fluchtwege zu bestimmen. Kurze Lauf-, Rettungswege sind durch gezielte Diagnose zu erreichen.

Die eingangs gestellte Aufgabe wird somit vollumfänglich gelöst.

In einer ersten Ausgestaltung der vorliegenden Erfindung ist die Betätigungserfassungseinrichtung dazu eingerichtet, als Betätigung des Betätigungselements eine Bewegung des Betätigungselements in der Längsrichtung zu erfassen.

Mit anderen Worten wird das Betätigungselement durch ein Ziehen oder ein Schieben des Betätigungselements in der Längsrichtung betätigt. Insbesondere bei Seilzugschaltern besteht die Betätigung darin, dass der Seilzug gezogen wird. Betätigungserfassungseinrichtung kann ein Schaltelement aufweisen, das mit dem das Betätigungselement gekoppelt ist. Die Kopplung ist derart, dass das Schaltelement bei einer Bewegung des Betätigungselements in der Längsrichtung schaltbar ist. Mit anderen Worten löst eine Bewegung des Betätigungselements in der Längsrichtung das Schaltelement aus. Insbesondere kann die Kopplung derart gestaltet sein, dass das Schaltelement erst bei einer Bewegung mit einer bestimmten Kraft geschaltet wird, sprich wenn das Betätigungselement zur Betätigung mit einer Bestimmten Kraft in der Längsrichtung gezogen oder geschoben wird, die einen vorbestimmten Schwellenwert übersteigt.

In einer weiteren Ausgestaltung der vorliegenden Erfindung ist das Signal ein elektrisches oder mechanisches Signal.

Das mechanische Signal kann eine transversale oder longitudinale Schwingung oder Welle sein. Zur Erzeugung des mechanischen Signals kann die Signalerzeugungseinheit ein mechanisches Anregungssystem aufweisen, das das Betätigungselement mechanisch zur Schwingung anregt. Beispielsweise kann die Signalerzeugungseinheit ein Piezoelement aufweisen, das das Betätigungselements zur Schwingung anregt. Alternativ kann die Signalerzeugungseinheit auch eine Antriebseinrichtung (beispielswiese einen Rotor oder einen Linearmotor) aufweisen, die das Betätigungselement, beispielsweise das Längsende, an dem die Signalerzeugungseinheit angeordnet ist, zur Schwingungserzeugung aus lenkt, sprich longitudinal oder transversal bewegt. Die Signalerfassungseinheit kann zum Erfassen des mechanischen Signals einen Sensor aufweisen, mittels dem das mechanische Signal, sprich die Schwingung des Betätigungselements, gemessen werden kann. Der Sensor kann beispielsweise ein Sensor, insbesondere ein Bewegungssensor, sein, mittels dem eine Lage bzw. eine Lageänderung des Betätigungselements erfasst und in eine elektrische Größe, sprich in Sensordaten, umgewandelt werden kann. Die Sensordaten repräsentieren das erfasste mechanische Signal. Der Sensor kann insbesondere ein piezoelektrischer Schwingungssensor, ein optischer Sensor oder ein mechanischer Sensor sein.

Das elektrische Signal ist eine elektrische Schwingung, die kapazitiv bzw. induktiv generiert bzw. angeregt wird. Bei Verwendung eines elektrischen Signals ist das Betätigungselement derart ausgestaltet, dass es zumindest teilweise leitend ist. Insbesondere kann zumindest die Außenfläche (sprich der Mantel) des Betätigungselements aus einem leitenden Material bestehen. Zur Erzeugung des elektrischen Signals kann die Signalerzeugungseinheit ein elektrisches Anregungssystem aufweisen, das die elektrische Schwingung erzeugt. Das elektrische Anregungssystem kann eine elektronische Schaltung sein, wobei der leitende Teil des Betätigungselements Teil der elektronischen Schaltung ist. Das Betätigungselement kann insbesondere als Leiter oder Antenne in der elektronischen Schaltung eingesetzt werden. Durch die Betätigung des Betätigungselements kann beispielsweise eine Eigenschaft der Antenne oder des Leiters verändert werden, was insbesondere das Resonanzverhalten der elektronischen Schaltung beeinflussen kann. Vorzugsweise kann die Signalerzeugungseinheit zur Erzeugung des elektrischen Signals einen elektrischen Generator, eine Oszillatorschaltung, einen offenen Schwingkreis oder einen geschlossenen Schwingkreis aufweisen. Die Signalerfassungseinheit kann zum Erfassen des elektrischen Signals einen Sensor aufweisen, mittels dem das elektrische Signal, sprich die elektrische Schwingung in der elektrischen Schaltung, gemessen werden kann. Beispielsweise kann die Signalerfassungseinheit dazu einen Spannungs- oder einen Stromsensor aufweisen. Der Sensor gibt die gemessenen Spannungs- bzw. Stromwerte als Sensordaten aus. Die Sensordaten repräsentieren dann das erfasste elektrische Signal.

Insbesondere kann auch vorgesehen sein, dass ein elektrisches Signal und ein mechanisches Signal auf das Betätigungselement beaufschlagt werden. Dazu kann die Betätigungsortbestimmungseinrichtung zum Beispiel zwei Signalerzeugungseinheiten aufweisen, eine zum Beaufschlagen des mechanischen Signals und eine weitere zum Beaufschlagen des elektrischen Signals. Entsprechend kann die Betätigungsortbestimmungseinrichtung dann auch zwei Signalerfassungseinheiten aufweisen, eine zum Erfassen des mechanischen Signals und eine weitere zum Erfassen des elektrischen Signals. Die Verarbeitungseinheit ist dann dazu eingerichtet, sowohl die Signalcharakteristik des mechanischen Signals als auch die Signalcharakteristik des elektrischen Signals zu bestimmen und dann den Betätigungsort auf Basis der Signalcharakteristik beider Signale zu bestimmen. Auf diese Weise kann der Betätigungsort zuverlässiger und genauer bestimmt werden.

In einer weiteren Ausgestaltung der vorliegenden Erfindung ist die Verarbeitungseinheit dazu eingerichtet, als Signalcharakteristik eine Frequenzcharakteristik und/oder eine Amplitudencharakteristik des erfassten Signals zu bestimmen.

Zur Bestimmung der Amplitudencharakteristik und/oder der Frequenzcharakteristik kann das erfasste Signal beispielsweise im Ortsraum und/oder im Frequenzraum analysiert werden. Das Signal wird in der Regel mittels der Signalerfassungseinheit im Ortsraum erfasst. Die Verarbeitungseinheit kann das erfasste Signal beispielsweise mittels einer Fourier-Transformation, insbesondere einer "Fast-Fourier-Transformation" (FFT), in den Frequenzraum transformieren. Insbesondere kann die Signalcharakteristik ein Frequenzspektrum des Signals aufweisen.

In einer weiteren Ausgestaltung der vorliegenden Erfindung ist die Verarbeitungseinheit dazu eingerichtet, eine Abweichung der bestimmten Signalcharakteristik gegenüber einer vorbestimmten Signalcharakteristik zu bestimmen und den Betätigungsort basierend auf der bestimmten Abweichung zu bestimmen.

Die vorbestimmte Signalcharakteristik wird im Voraus bestimmt. Die vorbestimmte Signalcharakteristik ist eine Signalcharakteristik ohne Betätigung des Betätigungselements. Die vorbestimmte Signalcharakteristik gibt somit die Signalcharakteristik des Signals an, die die Signalerfassungseinheit erfasst, wenn das Betätigungselement nicht betätigt wird, sprich wenn das Betätigungselement von keiner Person berührt wird. Die bestimmte Abweichung ist dann die Differenz zwischen bestimmter und vorbestimmter Signalcharakteristik. Mit anderen Worten ist die Abweichung eine Abweichung zwischen einer Signalcharakteristik unter Betätigung an einem bestimmten Betätigungsort und einer Signalcharakteristik ohne Betätigung.

In einer weiteren Ausgestaltung der vorliegenden Erfindung ist Orten entlang der Längsrichtung des Betätigungselements jeweils eine vorbestimmte Signalcharakteristik zugeordnet ist, und wobei die Verarbeitungseinheit dazu eingerichtet ist, den Betätigungsort basierend auf einem Vergleich der bestimmten Signalcharakteristik mit den vorbestimmten Signalcharakteristiken zu bestimmen.

Insbesondere kann im Voraus für die Orte des Betätigungselements entlang der Längsrichtung jeweils eine Signalcharakteristik bestimmt werden. Dazu kann das Betätigungselement an dem entsprechenden Ort betätigt werden und dann die Signalcharakteristik für diesen Ort bestimmt werden. Insbesondere können zur Bestimmung dieser Signalcharakteristiken die Signalerzeugungseinheit, die Signalerfassungseinheit und die Verarbeitungseinheit verwendet werden. Mit anderen Worten wird dadurch eine Kalibrierung durchgeführt. Insbesondere kann auf die Weise für jeden Ort des Betätigungselements entlang der Längsrichtung eine Signalcharakteristik bei Betätigung an diesem Ort bestimmt werden. Insbesondere kann für jeden Ort des Betätigungselements entlang der Längsrichtung eine Signalcharakteristik vorbestimmt werden. Die vorbestimmten Signalcharakteristiken können dann beispielsweise gespeichert werden. Dazu kann die Betätigungsortbestimmungseinrichtung oder die Verarbeitungseinheit beispielsweise eine Speichereinheit aufweisen, in dem die vorbestimmten Signalcharakteristiken gespeichert werden können.

Insbesondere kann jedem Ort auch eine vorbestimmte Abweichung gegenüber einer Signalcharakteristik ohne Betätigung zugeordnet sein, wobei die Verarbeitungseinheit dazu eingerichtet ist, den Betätigungsort basierend auf einem Vergleich der bestimmten Abweichung mit den vorbestimmten Abweichungen zu bestimmen.

In einer weiteren Ausgestaltung der vorliegenden Erfindung weist die Betätigungsvorrichtung des Weiteren eine Sendeeinrichtung auf, die dazu eingerichtet ist, Informationen bezüglich der erfassten Betätigung und des bestimmten Betätigungsorts an die Sicherheitssteuerung zu senden.

Auf diese Weise kann die Betätigungsvorrichtung im Falle einer erfassten Betätigung, die erfasste Betätigung gemeinsam mit dem entsprechenden, bestimmten Betätigungsort an die Sicherheitssteuerung übermitteln. Die Sicherheitssteuerung kann eine Empfangseinrichtung aufweisen, die dazu eingerichtet ist, Informationen bezüglich der erfassten Betätigung und des bestimmten Betätigungsorts von der Betätigungsvorrichtung zu empfangen. Die Sendeeinrichtung kann mit der Empfangseinrichtung über eine Signalverbindung verbunden sein. Die Signalverbindung kann entweder kabelgebunden oder kabellos sein. Bei einer kabellosen Verbindung kann zum Senden und Empfangen der Informationen eine Funkverbindung verwendet werden.

In einer weiteren Ausgestaltung der vorliegenden Erfindung ist die Sicherheitssteuerung dazu eingerichtet, wenn eine Betätigung des Betätigungselements erfasst wird, zumindest einen Teil der Anlage abzuschalten, insbesondere wobei der Teil der Anlage abgeschaltet wird, in dem der Betätigungsort liegt.

Die Betätigung des Betätigungselements führt somit zu einer Not-Abschaltung zumindest eines Teils der Anlage in Reaktion auf die Betätigung. Insbesondere kann die Information über den Betätigungsort einer erfassten Betätigung dazu verwendet werden, nur einen bestimmten Teil der Anlage abzuschalten. Dadurch können Produktivität und Effizienz verbessert werden, da beispielsweise in einem Gefahrenfall gezielt nur unmittelbar betroffene Teile der Anlage abgeschaltet werden.

In einer weiteren Ausgestaltung der vorliegenden Erfindung weist das Sicherheitssystem des Weiteren eine Ausgabeeinrichtung zum Ausgeben des Betätigungsortes der erfassten Betätigung des Betätigungselements auf.

Die Ausgabe des Betätigungsorts der erfassten Betätigung erlaubt die Verbesserung von Wartungs- und Sicherheitsprozessen der Anlage. Insbesondere kann durch die Kenntnis des Betätigungsorts die Ursache (bspw. eine Fehlfunktion der Anlage, eine Verletzung einer Person, etc.) für die Betätigung schneller und genauer ermittelt werden. Der Betätigungsort kann beispielsweise optisch und/oder akustisch ausgegeben werden. Zur optischen Ausgabe kann die Ausgabeeinrichtung beispielsweise eine Anzeigeeinrichtung, insbesondere einen Bildschirm, aufweisen, auf dem der Betätigungsort angezeigt werden kann. Zur akustischen Ausgabe kann die Ausgabeeinrichtung beispielsweise einen Lautsprecher aufweisen. Insbesondere ist durch die Auswertung der Ortsangabe (sprich des Betätigungsorts) auch eine schnelle Ausgabe beispielsweise über Leuchtmelder möglich, um den schnellsten und/oder kürzesten Fluchtweg anzuzeigen.

In einer weiteren Ausgestaltung der vorliegenden Erfindung weist das Verfahren des Weiteren den folgenden Schritt auf:
- Ausgeben des Betätigungsorts der erfassten Betätigung mittels einer Ausgabeeinrichtung.

Wie zuvor erläutert, erlaubt die Ausgabe des Betätigungsorts der erfassten Betätigung die Verbesserung von Wartungs- und Sicherheitsprozessen der Anlage. Insbesondere kann durch die Kenntnis des Betätigungsorts die Ursache (bspw. eine Fehlfunktion der Anlage, eine Verletzung einer Person, etc.) für die Betätigung schneller und genauer ermittelt werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine schematische Ansicht einer ersten Ausführungsform einer Betätigungsvorrichtung;
- Fig. 2: eine beispielhafte Ansicht eines Betätigungselements der Betätigungsvorrichtung aus Fig. 1;
- Fig. 3: eine beispielhafte Ansicht einer Anordnung der Betätigungsvorrichtung aus Fig. 1;
- Fig. 4: eine schematische Ansicht einer zweiten Ausführungsform einer Betätigungsvorrichtung;
- Fig. 5: eine schematische Ansicht einer Ausführungsform eines Sicherheitssystems zur Absicherung einer Anlage;
- Fig. 6: eine schematische Ansicht einer Ausführungsform eines Verfahrens zur Absicherung einer Anlage;
- Fig. 7: eine schematische Ansicht von Verfahrensschritten zum Bestimmen eines Betätigungsorts im Verfahren der Fig. 6;
- Fig. 8: eine beispielhafte Ansicht einer Anordnung einer Betätigungsvorrichtung in einer Anlage;
- Fig. 9: eine beispielhafte Ansicht einer manuellen Betätigung einer Betätigungsvorrichtung;
- Fig. 10: eine beispielhafte Ansicht eines Signals ohne Betätigung einer Betätigungsvorrichtung; und
- Fig. 11: eine beispielhafte Ansicht eines Signals mit Betätigung einer Betätigungsvorrichtung.

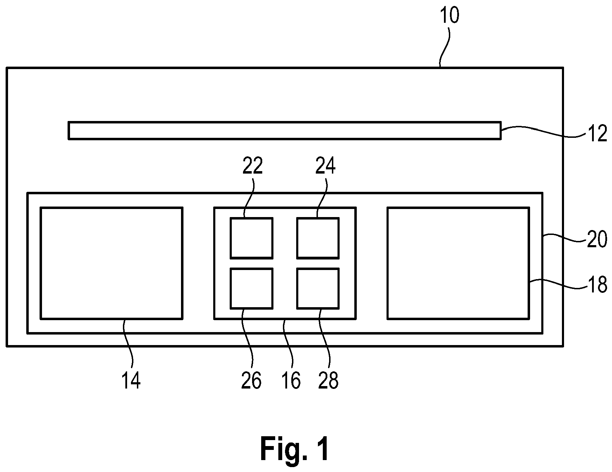

Fig. 1 zeigt eine erste Ausführungsform einer Betätigungsvorrichtung 10. Die Betätigungsvorrichtung 10 weist ein Betätigungselement 12, eine Betätigungserfassungseinrichtung 14 und eine Betätigungsortbestimmungseinrichtung 16 auf.

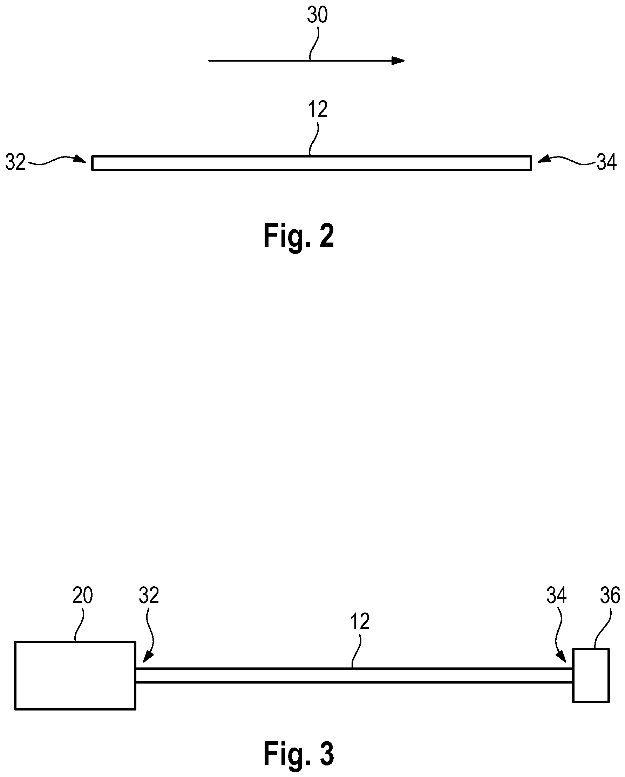

In Fig. 2 ist eine beispielhafte Ausführung des Betätigungselements 12 der Betätigungsvorrichtung 10 dargestellt. Das Betätigungselement 12 erstreckt sich entlang einer Längsrichtung 30. Das Betätigungselement 12 hat ein erstes Längsende 32 und ein zweites Längsende 34. Das erste Längsende 32 und das zweite Längsende 34 sind in der Längsrichtung 30 auf entgegengesetzten Seiten des Betätigungselement 12 angeordnet.

Die Betätigungserfassungseinrichtung 14 ist dazu eingerichtet, eine Betätigung des Betätigungselements 12 zu erfassen. Die Betätigungserfassungseinrichtung 14 kann beispielsweise eine Bewegung (beispielsweise ein Ziehen oder ein Schieben/Drücken) des Betätigungselements 12 in der Längsrichtung 30 als eine Betätigung des Betätigungselements 12 erfassen.

Die Betätigungsortbestimmungseinrichtung 16 ist dazu eingerichtet, einen Betätigungsort der erfassten Betätigung entlang einer Längsrichtung 30 zu bestimmen. Die Betätigungsortbestimmungseinrichtung 16 weist dazu eine Signalerzeugungseinheit 22, eine Signalerfassungseinheit 24, und eine Verarbeitungseinheit 26 auf.

Die Signalerzeugungseinheit 22 ist dazu eingerichtet, ein Signal auf dem Betätigungselement entlang der Längsrichtung 30 zu erzeugen. Das Signal kann ein elektrisches oder mechanisches Signal sein. Die Signalerzeugungseinheit 22 kann das Signal fortlaufend oder zu einem bestimmten Zeitpunkt erzeugen, insbesondere wenn die Betätigungserfassungseinrichtung eine Betätigung erfasst hat (sprich in Reaktion auf eine erfasste Betätigung).

Die Signalerfassungseinheit 24 ist dazu eingerichtet, das erzeugte Signal während der Betätigung zu erfassen. Insbesondere kann die Signalerfassungseinheit 24 das erzeugte Signal erfassen, wenn die Betätigungserfassungseinrichtung eine Betätigung erfasst hat (sprich in Reaktion auf eine erfasste Betätigung) und die Signalerzeugungseinheit 22 das Signal erzeugt hat.

Die Verarbeitungseinheit 26 ist dazu eingerichtet, eine Signalcharakteristik des erfassten Signals zu bestimmen und den Betätigungsort basierend auf der bestimmten Signalcharakteristik zu bestimmen. Die zu bestimmende Signalcharakteristik kann beispielsweise eine Frequenzcharakteristik und/oder eine Amplitudencharakteristik, insbesondere ein Frequenzspektrum, des erfassten Signals sein.

Orten entlang der Längsrichtung 30 des Betätigungselements 12 kann jeweils eine vorbestimmte Signalcharakteristik zugeordnet sein. Die Verarbeitungseinheit 26 kann den Betätigungsort dann basierend auf einem Vergleich der bestimmten Signalcharakteristik mit den vorbestimmten Signalcharakteristiken bestimmen.

Alternativ kann die Verarbeitungseinheit 26 eine Abweichung der bestimmten Signalcharakteristik gegenüber einer vorbestimmten Signalcharakteristik bestimmen und dann den Betätigungsort basierend auf der bestimmten Abweichung bestimmen. Hierzu kann dann Orten entlang der Längsrichtung 30 des Betätigungselements 12 kann jeweils eine vorbestimmte Abweichung gegenüber der vorbestimmten Signalcharakteristik zugeordnet sein, so dass dann der Betätigungsort basierend auf einem Vergleich der bestimmten Abweichung mit den vorbestimmten Abweichungen bestimmt werden kann.

Die Betätigungsortbestimmungseinrichtung 16 kann des Weiteren eine Speichereinheit 28 aufweisen. In der Speichereinheit 28 können beispielweise die vorbestimmten Signalcharakteristiken oder die vorbestimmten Abweichungen gespeichert sein.

Das Betätigungselement 12 ist insbesondere ein Seilzug oder ein Stab. Beispielsweise kann das Betätigungselement 12 einen Kern und einen Mantel aufweisen. Der Kern ist vorzugsweise zylinderförmig. Der Mantel umgibt den Kern. Der Mantel und der Kern erstrecken sich beide in der Längsrichtung. Der Mantel und der Kern können aus zwei unterschiedlichen Materialien bestehen. Die Materialien können derart gewählt sein, dass das erzeugte Signal eine gewünschte Signalcharakteristik erhält und bei Betätigung diese in gewünschter Weise ändert.

Die Betätigungsvorrichtung 10 kann des Weiteren auch eine Sendeeinrichtung 18 aufweisen. Die Sendeeinrichtung 18 ist dazu eingerichtet, Informationen bezüglich der erfassten Betätigung und des bestimmten Betätigungsorts an eine Sicherheitssteuerung zu senden. Die Sicherheitssteuerung kann beispielsweise Teil eines Sicherheitssystems für eine Anlage sein, wobei die Sicherheitssteuerung in Reaktion auf eine Betätigung eines Betätigungselements 12 der Betätigungsvorrichtung 10 zumindest einen Teil der Anlage in einen sicheren Zustand überführen kann.

Die Betätigungsvorrichtung 10 kann des Weiteren ein Gehäuse 20 aufweisen. Die Betätigungserfassungseinrichtung 14 kann in oder an dem Gehäuse 20 angeordnet sein. Die Betätigungsortbestimmungseinrichtung 16 kann zumindest teilweise in oder an dem Gehäuse 20 angeordnet sind. Auch die Sendeeinrichtung 18 kann in dem Gehäuse 20 angeordnet sein.

In Fig. 3 ist eine bespielhafte Anordnung der Betätigungsvorrichtung 10 dargestellt. Das Gehäuse 20 ist an dem ersten Längsende 32 des Betätigungselements 12 angeordnet. Die Betätigungsvorrichtung 10 kann zusätzlich ein Gegenelement 36 aufweisen. Das Gegenelement 36 ist an dem zweiten Längsende 34 angeordnet. Das Gegenelement 36 dient als Gegenlager, an dem das zweite Längsende 34 befestigt ist.

Die Betätigungserfassungseinrichtung 14 kann in oder an dem Gehäuse 20 angeordnet sein. Die Betätigungserfassungseinrichtung 14 ist in diesem Fall ebenfalls an dem ersten Längsende 32 des Betätigungselements 12 angeordnet. Insbesondere kann die Betätigungserfassungseinrichtung 14 dazu eingerichtet sein, eine Bewegung des ersten Längsendes 32 als die Betätigung zu erfassen. Beispielsweise kann das erste Längsende 32 des Betätigungselements 12 mit einem Schaltelement der Betätigungserfassungseinrichtung 14 gekoppelt sein, welches bei einer Bewegung in der Längsrichtung 30 geschaltet wird.

Die Betätigungsortbestimmungseinrichtung 16 kann in oder an dem Gehäuse 20 und/oder in oder an dem Gegenelement 36 angeordnet sein. Insbesondere kann die gesamte Betätigungsortbestimmungseinrichtung 16 in oder an dem Gehäuse 20 und somit an dem ersten Längsende 32 angeordnet sein. Alternativ kann die gesamte Betätigungsortbestimmungseinrichtung 16 in oder an dem Gegenelement 36 und somit an dem zweiten Längsende 34 angeordnet sein. In einer weiteren Alternative kann auch ein erster Teil der Betätigungsortbestimmungseinrichtung 16 (beispielsweise die Signalerfassungseinheit 24, die Verarbeitungseinheit 26 und die Speichereinheit 28) in oder an dem Gehäuse 20 und somit an dem ersten Längsende 32 angeordnet sein, während ein zweiter Teil (beispielsweise die Signalerzeugungseinheit 22) in oder an dem Gegenelement 36 und somit an dem zweiten Längsende 34 angeordnet ist.

Grundsätzlich könnte eine bestehende Betätigungsvorrichtung, die ein Betätigungselement und eine Betätigungserfassungseinrichtung, aber keine Betätigungsortbestimmungseinrichtung aufweist, mit einer Betätigungsortbestimmungseinrichtung (insbesondere einem Modul, dass eine Betätigungsortbestimmungseinrichtung enthält) nachgerüstet werden, um die beschriebene Betätigungsvorrichtung 10 zu bilden.

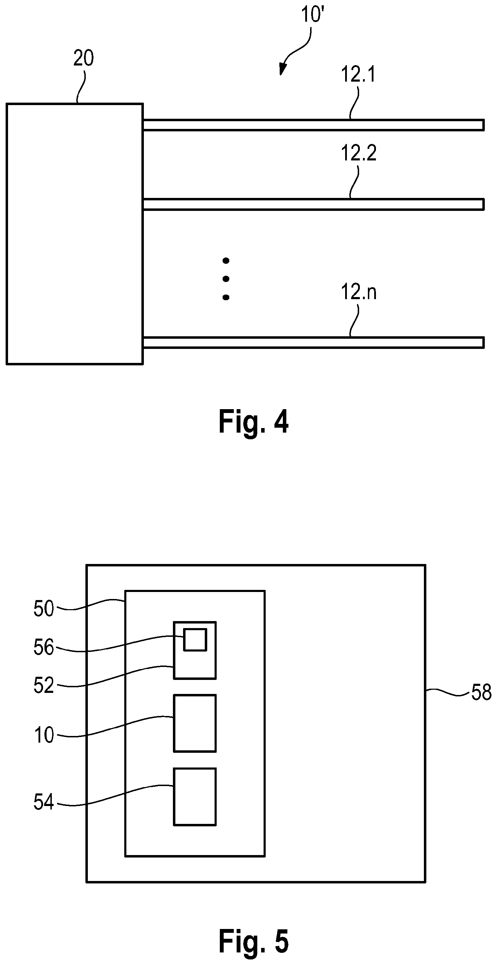

Fig. 4 zeigt eine zweite Ausführungsform einer Betätigungsvorrichtung 10'. Die Betätigungsvorrichtung 10' der zweiten Ausführungsform hat im Wesentlichen denselben Aufbau wie die Betätigungsvorrichtung 10 der ersten Ausführungsform. Gleiche Elemente sind mit den gleichen Bezugszeichen gekennzeichnet und werden nicht näher erläutert.

Die Betätigungsvorrichtung 10' der zweiten Ausführungsform unterscheidet sich von der Betätigungsvorrichtung 10 der ersten Ausführungsform darin, dass die Betätigungsvorrichtung 10' der zweiten Ausführungsform eine Mehrzahl von Betätigungselementen 12.1 bis 12.n aufweist. Insbesondere weist die Betätigungsvorrichtung 10' eine Anzahl von n Betätigungselementen auf. Die Anzahl n der Betätigungselemente kann zwei, drei oder mehr sein. Die Betätigungselementen 12.1 bis 12.n sind insbesondere Seilzüge. Die Betätigungselemente 12.1 bis 12.n können derart angeordnet sein, dass jeweils ein Längsende jedes Betätigungselements an dem Gehäuse 20 angeordnet ist. Das Gehäuse 20 dient somit als Sternpunkt mit Abgang jedes Betätigungselements in verschiede Richtungen.

Die Betätigungserfassungseinrichtung 14 ist dazu eingerichtet, eine Betätigung jedes der Betätigungselementen 12.1 bis 12.n zu erfassen. Die Betätigungsortbestimmungseinrichtung 16 ist dazu eingerichtet, bei einer erfassten Betätigung für das entsprechende Betätigungselement den Betätigungsort zu bestimmen. Dazu kann die Betätigungsortbestimmungseinrichtung 16 für jedes der Betätigungselemente 12.1 bis 12.n jeweils eine Signalerzeugungseinheit 22 zur Erzeugung jeweils eines Signals auf dem entsprechenden Betätigungselement und jeweils eine Signalerfassungseinheit 24 zum Erfassen des erzeugten Signals auf dem entsprechenden Betätigungselement bei der Betätigung aufweisen. Die Signalerzeugungseinheiten und die Signalerfassungseinheiten können in gemeinsam in dem Gehäuse 20 angeordnet sein. Alternativ können diese auch räumlich getrennt voneinander angeordnet sein. Die Verarbeitungseinheit 26 der Betätigungsortbestimmungseinrichtung 16 dann dazu eingerichtet sein, auf Basis jedes erfassten Signals der Signalerfassungseinheiten den Betätigungsort des entsprechenden Betätigungselements zu bestimmen. Alternativ kann die Betätigungsortbestimmungseinrichtung 16 auch für jedes der Betätigungselemente 12.1 bis 12.n eine Verarbeitungseinheit zur Bestimmung des entsprechenden Betätigungsorts aufweisen.

Fig. 5 zeigt eine Ausführungsform eines Sicherheitssystems 50 zur Absicherung einer Anlage 58. Das Sicherheitssystem 50 kann Teil der Anlage 58 sein. Das Sicherheitssystem 50 weist eine Betätigungsvorrichtung 10 und eine Sicherheitssteuerung 52 auf. Die Betätigungsvorrichtung 10 kann beispielsweise entsprechend der Betätigungsvorrichtung 10 nach der ersten Ausführungsform oder der Betätigungsvorrichtung 10' nach der zweiten Ausführungsform ausgebildet sein.

Die Sicherheitssteuerung 52 ist dazu eingerichtet, in Reaktion auf eine Betätigung eines Betätigungselements 12 der Betätigungsvorrichtung 10 die Anlage 58 in einen sicheren Zustand zu überführen. Insbesondere kann die Sicherheitssteuerung 52 zumindest einen Teil der Anlage 58 abzuschalten, wenn eine Betätigung des Betätigungselements erfasst wird. Dabei kann die Sicherheitssteuerung 52 beispielsweise den Teil der Anlage 58 abgeschaltet wird, in dem der bestimmte Betätigungsort der erfassten Betätigung liegt.

Die Sicherheitssteuerung 52 kann eine Empfangseinrichtung 56 aufweisen. Die Empfangseinrichtung 56 ist dazu eingerichtet, Informationen bezüglich der erfassten Betätigung und des bestimmten Betätigungsorts von der Betätigungsvorrichtung 10, insbesondere von der Sendeeinrichtung 28, zu empfangen. Die Sendeeinrichtung 28 kann mit der Empfangseinrichtung 56 über eine Signalverbindung verbunden sein. Die Signalverbindung kann entweder kabelgebunden oder kabellos sein.

Das Sicherheitssystem 50 kann des Weiteren eine Ausgabeeinrichtung 54 aufweisen. Die Ausgabeeinrichtung 54 ist dazu eingerichtet, den Betätigungsort der erfassten Betätigung des Betätigungselements 12 auszugeben. Die Ausgabe kann beispielsweise optische mittels einer Anzeigevorrichtung oder akustisch mittels eines Lautsprechers erfolgen.

Das Sicherheitssystem 50 kann auch eine Mehrzahl von Betätigungsvorrichtungen 10 aufweisen. Die Betätigungsvorrichtungen 10 können in verschiedenen Teilen der Anlage 58 angeordnet sein. Jede dieser Betätigungsvorrichtungen 10 kann im Falle einer Betätigung der Sicherheitssteuerung 52 mitteilen, dass eine Betätigung erfasst wurde und wo der Betätigungsort der erfassten Betätigung ist. Die Sicherheitssteuerung 52 kann zum Beispiel die gesamte Anlage oder zumindest den jeweiligen Teilen der Anlage 58, in der die jeweilige Betätigungsvorrichtung 10 angeordnet ist, in einen sicheren Zustand überführen, insbesondere abschalten.

Das beschriebene Sicherheitssystem 50 mit der beschriebenen Betätigungsvorrichtung 10 kann zur Absicherung in verschiedener Anlagen 58 verwendet werden. Insbesondere kann das beschriebene Sicherheitssystem 50 in Anlagen verwendet werden, Arbeitsplätze aufweisen, die sich über einen gewissen Bereich der Anlage erstrecken, um eine möglichst lange Erreichbarkeit des Auslöseelements zu gestalten. Dazu zählen Sortierstrecken, Logistik und Lagergebäude, Abfall,- Entsorgungsbetriebe, sowie der Bergbau und Mining Bereich. Im Folgenden werden verschiedene Anwendungsbeispiele für die Anlage 58 beschrieben, in denen das beschriebene Sicherheitssystem 50, insbesondere die beschriebene Betätigungsvorrichtung 10, vorteilhaft eingesetzt werden kann.

Ein erstes Anwendungsbeispiel für die Anlage 58 ist der Bergbau, sprich ein Bergwerk. Im Bergbau liegen oft lange Förderstrecken sowie teilweise nicht einsehbare Arbeitsumgebung bedingt durch Verschmutzung und Lichtverhältnisse vor. Insbesondere sind können hierbei in Segmente aufgeteilte Förderstrecken über horizontale und vertikale Bereiche hinweg vorhanden sein.

Ein zweites Anwendungsbeispiel für die Anlage 58 ist die Logistik, insbesondere Lagerlogistik, in denen Förderbänder und Förderstrecken zum Einsatz kommen. Hierbei kann es wechselnde Transportrichtungen und wechselnde Gütergröße geben. Entlang der Förderbänder können teilwiese Handarbeitsplätze vorgesehen sein. Insbesondere können verzweigte Anordnungen der Transportstrecken vorliegen.

Ein zweites Anwendungsbeispiel für die Anlage 58 ist die Entsorgungsbranche, insbesondere Sortieranlagen. Entsorgungsbetriebe verfügen über Lange Transportstrecken, die teilwiese große Lasten aufnehmen können. Zum Zwecke der Abfalltrennung sind Handarbeitsplätze entlang der Förderstrecken vorgesehen.

In allen drei Anwendungsbeispielen werden bisher seilgeführte Sicherheitssysteme eingesetzt, die sich über lange Wegstrecken erstrecken. Das beschriebene Sicherheitssystem 50 mit der beschriebenen Betätigungsvorrichtung 10 ermöglicht es, den gleichen Bereich (wie von bisherigen seilgeführten Sicherheitssystemen) abzudecken, aber zusätzlich bei Betätigung (Auslösung) der Betätigungsvorrichtung 10 den genauen Betätigungsort (Auslösestelle) zu bestimmen, was mit bisherigen seilgeführten Sicherheitssystemen nicht möglich ist.

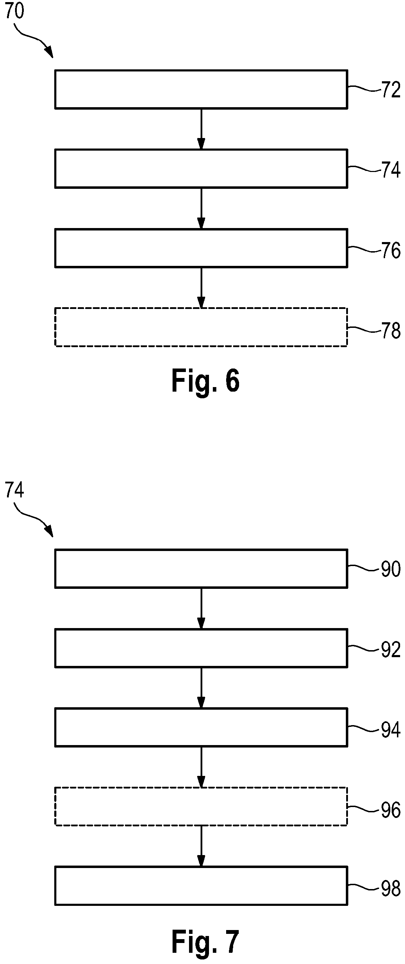

Fig. 6 zeigt eine Ausführungsform eines Verfahrens 70 zur Absicherung einer Anlage, beispielsweise der Anlage 58. Das Verfahren 70 kann beispielsweise mittels des Sicherheitssystems 50 durchgeführt werden.

In einem ersten Schritt 72 des Verfahrens 70 wird eine Betätigung des Betätigungselements 12 mittels der Betätigungserfassungseinrichtung 14 erfasst, wobei sich das Betätigungselement 12 in der Längsrichtung 30 erstreckt.

In einem weiteren Schritt 74 des Verfahrens 70 wird ein Betätigungsort der erfassten Betätigung in der Längsrichtung 30 mittels der Betätigungsortbestimmungseinrichtung 16 bestimmt.

In einem weiteren Schritt 76 des Verfahrens 70 wird die Anlage 58 mittels der Sicherheitssteuerung 52 in Reaktion auf eine Betätigung des Betätigungselements 12 in einen sicheren Zustand überführt.

In einem weiteren, optionalen Schritt 78 des Verfahrens 70 wird der Betätigungsort der erfassten Betätigung mittels der Ausgabeeinrichtung 54 ausgegeben.

In Fig. 7 sind Verfahrensschritte angegeben, mittels denen der Betätigungsort in dem Schritt 74 des Verfahrens 70 bestimmt werden kann.

In einem ersten Schritt 90 erzeugt die Signalerzeugungseinheit 22 der Betätigungsortbestimmungseinrichtung 16 ein Signal auf dem Betätigungselement 12 entlang der Längsrichtung 30.

In einem weiteren Schritt 92 erfasst die Signalerfassungseinheit 24 der Betätigungsortbestimmungseinrichtung 16 das erzeugte Signal während der Betätigung.

In einem weiteren Schritt 94 bestimmt die Verarbeitungseinheit 26 der Betätigungsortbestimmungseinrichtung 16 eine Signalcharakteristik des erfassten Signals.

In einem weiteren, optionalen Schritt 96 bestimmt die Verarbeitungseinheit 26 eine Abweichung der bestimmten Signalcharakteristik gegenüber einer vorbestimmten Signalcharakteristik.

In einem weiteren Schritt 98 bestimmt die Verarbeitungseinheit 26 den Betätigungsort basierend auf der bestimmten Signalcharakteristik. Insbesondere kann die Verarbeitungseinheit 26 den Betätigungsort basierend auf der bestimmten Abweichung bestimmen.

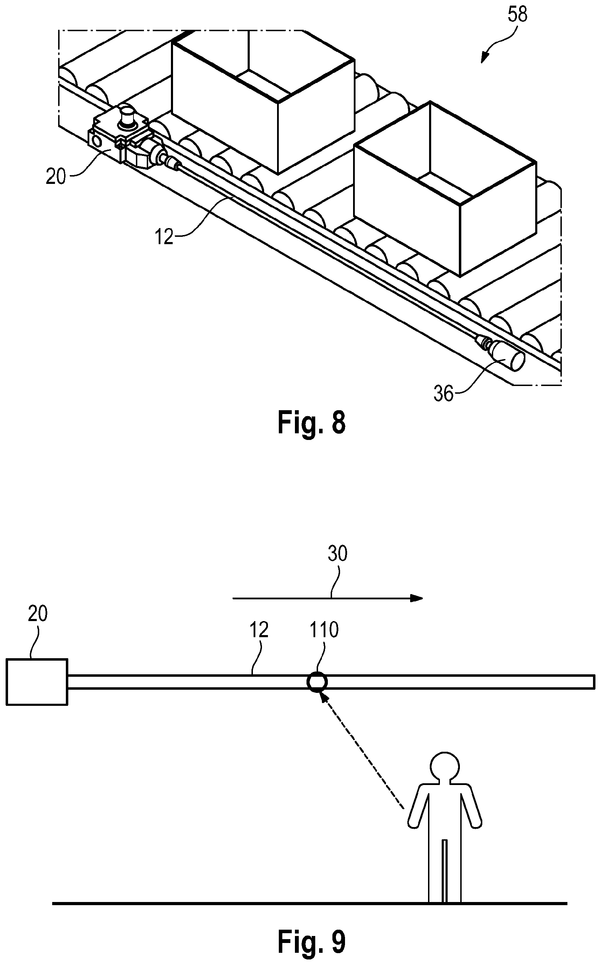

Fig. 8 zeigt eine beispielhafte Anordnung der Betätigungsvorrichtung 10 in einem Bereich (Teil) einer Anlage 58. In diesem Beispiel hat die Anlage 58 eine Förderstrecke. Das Betätigungselement 12 ist in diesem Beispiel ein Seilzug. Das Betätigungselement 12 erstreckt sich in der Längsrichtung 30 entlang der Förderstrecke. Die Längsrichtung 30 entspricht dabei im Wesentlichen der Förderrichtung der Förderstrecke. An dem ersten Längsende des Betätigungselements 12 ist das Gehäuse 20 angeordnet. An dem zweiten Längsende des Betätigungselements 12 ist das Gegenelement 36 angeordnet. Die Betätigungsortbestimmungseinrichtung 16 kann in bzw. an dem Gehäuse 20 und/oder in bzw. an dem Gegenelement 36 angeordnet sein.

Zusätzlich zu dem Betätigungselement 12 kann die Betätigungsvorrichtung 10 ein weiteres Betätigungselement wie beispielsweise eine Taste aufweisen, die an dem Gehäuse angeordnet ist und ebenfalls betätigt werden kann.

Im Folgenden wird unter Bezugnahme auf die Figuren 9-11 erläutert, wie mittels eines auf dem Betätigungselement 12 erzeugten Signals der Betätigungsort an dem Betätigungselement 12 in der Längsrichtung 30 bestimmt werden kann.

In Fig. 9 ist beispielhaft eine manuelle Betätigung des Betätigungselements 12 der Betätigungsvorrichtung 10 dargestellt. Eine Person greift dazu beispielsweise das Betätigungselement 12 an einem Betätigungsort 110 und bewegt (insbesondere zieht oder schiebt) das Betätigungselements 12. Dabei wird das erste Längsende 32 des Betätigungselements 12 (an dem das Gehäuse 20 mit der Betätigungserfassungseinrichtung 14 angeordnet ist) in der Längsrichtung bewegt. Bei der Betätigung wird das Betätigungselement 12 somit von der Person an dem Betätigungsort berührt, insbesondere gegriffen.

Wie bereits erläutert, wird mittels der Signalerzeugungseinheit 22 ein Signal auf dem Betätigungselement 12 entlang der Längsrichtung 30 erzeugt. Das Signal ist beispielweise eine Schwingung. Insbesondere kann das Signal auch mehrere Schwingungen aufweisen, aus denen sich dann das Signal zusammensetzt.

Das Signal kann beispielsweise mittels der Signalerzeugungseinheit 22 erzeugt und entlang des Betätigungselements gesendet werden. Das Betätigungselement 12 kann auch zumindest Teil eines mechanischen oder elektrischen Systems mit einem bestimmten Resonanzverhalten sein, wobei die Signalerzeugungseinheit 22 dieses System zur Resonanz anregen, sprich in Schwingung versetzen, kann. Das Signal entspricht dann der angeregten Schwingung bzw. den angeregten Schwingungen.

Bei der Betätigung des Betätigungselements 12 wird das Betätigungselement 12 von einer Person gegriffen bzw. berührt. Dabei ändert sich das Signalverhalten, insbesondere die Signalcharakteristik des erzeugten Signals.

Beispielsweise kann sich bei der Betätigung das Resonanzverhalten des angeregten Systems, insbesondere das Resonanzverhalten des Betätigungselements, ändern. Insbesondere können sich dabei Frequenzen und/oder Amplituden der Schwingung(en) des erzeugten (angeregten) Signals ändern. Mit anderen Worten kann sich dabei die Frequenzcharakteristik oder die Amplitudencharakteristik (insbesondere das Frequenzspektrum) des erzeugten Signals ändern.

Des Weiteren kann die Betätigung auch zu zusätzlichen Resonanzen führen, wodurch weitere Schwingungen angeregt werden können. Auch hierbei ändert sich bei Betätigung die Frequenzcharakteristik und/oder die Amplitudencharakteristik (insbesondere das Frequenzspektrum) des erzeugten Signals.

Des Weiteren kann die Betätigung auch zu einer Dämpfung des Signals führen, wodurch Amplituden der Schwingung(en) des Signals beeinflusst werden. Dadurch wird insbesondere die Amplitudencharakteristik des erzeugten Signals beeinflusst.

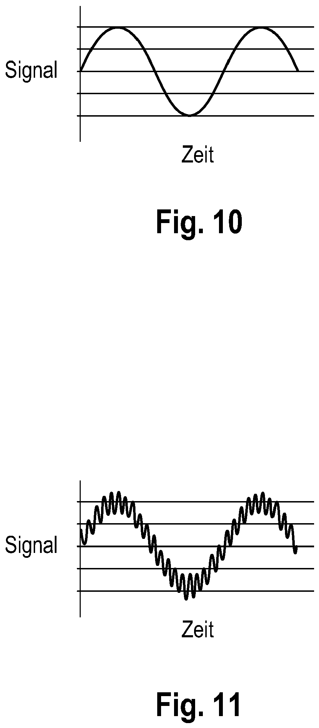

Fig. 10 zeigt eine beispielhafte Ansicht eines Signals ohne Betätigung der Betätigungsvorrichtung 10, sprich ohne Betätigung des Betätigungselements 12. In diesem Beispiel ist das Signal ein Sinus-Signal, sprich eine Sinus-Schwingung.

Fig. 11 zeigt eine beispielhafte Ansicht eines Signals mit Betätigung einer Betätigungsvorrichtung, sprich mit Betätigung des Betätigungselements 12. Das Signal besteht aus einer Überlagerung von mehreren Schwingungen. Insbesondere ist das Sinus-Signal aus Fig. 10 mit Schwingungen höherer Frequenz überlagert, welche aus der Betätigung resultieren.

Die Figuren 10 und 11 zeigen somit ein Beispiel in dem sich das Signalverhalten, insbesondere eine Signalcharakteristik, durch die Betätigung des Betätigungselements 12 verändert.

Zur Erzeugung eines mechanischen Signals kann die Signalerzeugungseinheit 22 ein mechanisches Anregungssystem aufweisen, das das Betätigungselement 12 mechanisch zur Schwingung anregt oder eine Stoßwelle entlang des Betätigungselements 12 sendet. Beispielsweise kann die Signalerzeugungseinheit 22 dazu ein Piezoelement oder eine Antriebseinrichtung aufweisen. Das mechanische Signal kann dabei eine Schwingung aufweisen oder sich aus mehreren Schwingungen zusammensetzten. Durch die Betätigung des Betätigungselement 12 wird das Signal mechanisch beeinflusst. Dabei ändert sich durch die Betätigung das Signalverhalten, insbesondere eine Signalcharakteristik, des Signals. Mittels der Signalerfassungseinheit 24 kann das erzeugte Signal dann während der Betätigung erfasst werden. Dazu kann die Signalerfassungseinheit 24 Beispielsweise einen entsprechenden Sensor aufweisen. Durch die Betätigung hat das erfasste Signal eine Signalcharakteristik, die von dem Betätigungsort abhängt.

Zur Erzeugung des elektrischen Signals kann die Signalerzeugungseinheit 22 ein elektrisches Anregungssystem aufweisen, das die elektrische Schwingung erzeugt. Beispielsweise kann die Signalerzeugungseinheit 22 dazu einen elektrischen Generator, eine Oszillatorschaltung, einen offenen Schwingkreis oder einen geschlossenen Schwingkreis aufweisen. Durch die Betätigung des Betätigungselement 12 wird das Signal elektrisch beeinflusst. Dabei ändert sich durch die Betätigung das Signalverhalten, insbesondere eine Signalcharakteristik, des Signals. Mittels der Signalerfassungseinheit 24 kann das erzeugte Signal dann während der Betätigung erfasst werden. Dazu kann die Signalerfassungseinheit 24 Beispielsweise einen entsprechenden Sensor aufweisen. Durch die Betätigung hat das erfasste Signal eine Signalcharakteristik, die von dem Betätigungsort abhängt.

Wenn auf dem Betätigungselement 12 ein elektrisches Signal erzeugt wird, dann ist es möglich die Stelle zu erkennen, an welcher eine Person das Betätigungselement 12 berührt und eine Verbindung zum Erdboden herstellt. Technisch kann durch Beaufschlagung eines Signals dann die Veränderung messtechnisch erkannt werden, da angenommen werden kann, dass das Seil eine Art Antenne mit einer definierten Frequenz / Resonanzverhalten bildet. Bei Beaufschlagung mit einer "Sendefrequenz" ändert sich das Signalverhalten des Signals, wenn durch einen Körper die "Antenne" in ihrem Verhalten verändert wird. Messtechnisch kann dann die Stelle ermittelt werden, an welcher die Verbindung zur Erde hergestellt wurde. Dies lässt einen Rückschluss zur Leitungslänge am Seil zu und somit eine Lokalisierung der Auslösestelle, sprich des Betätigungsorts.

Die Signalerzeugungseinheit 22 und die Signalerfassungseinheit 24 können beide entweder an dem ersten Längsende 32 oder an dem zweiten Längsende 34 angeordnet sein. Alternativ kann die Signalerzeugungseinheit 22 an einem der beiden Längsenden angeordnet sein, während die Signalerfassungseinheit 24 an dem anderen Längsende angeordnet ist.

Um eine ungewollte Auslösung der Diagnose zu unterbinden kann beispielsweise vorgesehen sein, die Diagnose erst auszuwerten, wenn eine mechanische Auslösung des Betätigungselements 12 als Not Halt auch erfolgt ist.

Das System der Messung kann auch über eine entsprechende Ansprechschwelle, bzw. Empfindlichkeit verfügen, um Fremdstörungen auszublenden. Fremdstörungen können Verschmutzung, versehentliche Berührung mit Arbeitskleidung, Regenwasser oder Umwelteinflüsse sein (Regen, Schnee, etc.) sein.

## Patentansprüche

1. Betätigungsvorrichtung (10) für eine Sicherheitssteuerung (52) zum Überführen einer Anlage (58) in einen sicheren Zustand in Reaktion auf eine Betätigung eines Betätigungselements (12) der Betätigungsvorrichtung (10), wobei die Betätigungsvorrichtung (10) das Betätigungselement (12) und eine Betätigungserfassungseinrichtung (14) zum Erfassen einer Betätigung des Betätigungselements (12) aufweist, wobei sich das Betätigungselement (12) in einer Längsrichtung (30) erstreckt, **dadurch gekennzeichnet, dass** die Betätigungsvorrichtung (10) des Weiteren eine Betätigungsortbestimmungseinrichtung (16) zum Bestimmen eines Betätigungsorts der erfassten Betätigung entlang der Längsrichtung (30) aufweist, wobei die Betätigungsortbestimmungseinrichtung (16) eine Signalerzeugungseinheit (22) zum Erzeugen eines Signals auf dem Betätigungselement (12) entlang der Längsrichtung (30), eine Signalerfassungseinheit (24) zum Erfassen des erzeugten Signals während der Betätigung, und eine Verarbeitungseinheit (26) aufweist, wobei die Verarbeitungseinheit (26) dazu eingerichtet ist, eine Signalcharakteristik des erfassten Signals zu bestimmen und den Betätigungsort basierend auf der bestimmten Signalcharakteristik zu bestimmen.

2. Betätigungsvorrichtung (10) nach Anspruch 1, wobei die Betätigungserfassungseinrichtung (14) dazu eingerichtet ist, als Betätigung des Betätigungselements (12) eine Bewegung des Betätigungselements (12) in der Längsrichtung zu erfassen.

3. Betätigungsvorrichtung (10) nach Anspruch 1 oder 2, wobei das Signal eine Schwingung ist.

4. Betätigungsvorrichtung (10) nach Anspruch 3, wobei die Signalerzeugungseinheit dazu eingerichtet ist, das Betätigungselement (12) mechanisch und/oder elektrisch zum Schwingen anzuregen.

5. Betätigungsvorrichtung (10) nach einem der Ansprüche 1 bis 4, wobei die Verarbeitungseinheit (26) dazu eingerichtet ist, als Signalcharakteristik eine Frequenzcharakteristik und/oder eine Amplitudencharakteristik des erfassten Signals zu bestimmen.

6. Betätigungsvorrichtung (10) nach einem der Ansprüche 1 bis 5, wobei die Verarbeitungseinheit (26) dazu eingerichtet ist, eine Abweichung der bestimmten Signalcharakteristik gegenüber einer vorbestimmten Signalcharakteristik zu bestimmen und den Betätigungsort basierend auf der bestimmten Abweichung zu bestimmen.

7. Betätigungsvorrichtung (10) nach einem der Ansprüche 1 bis 6, wobei Orten entlang der Längsrichtung (30) des Betätigungselements (12) jeweils eine vorbestimmte Signalcharakteristik zugeordnet ist, und wobei die Verarbeitungseinheit (26) dazu eingerichtet ist, den Betätigungsort basierend auf einem Vergleich der bestimmten Signalcharakteristik mit den vorbestimmten Signalcharakteristiken zu bestimmen.

8. Betätigungsvorrichtung (10) nach einem der Ansprüche 1 bis 7, wobei die Betätigungsvorrichtung (10) des Weiteren eine Sendeeinrichtung (18) aufweist, die dazu eingerichtet ist, Informationen bezüglich der erfassten Betätigung und des bestimmten Betätigungsorts an die Sicherheitssteuerung (52) zu senden.

9. Betätigungsvorrichtung (10) nach einem der Ansprüche 1 bis 8, wobei das Betätigungselement ein Seil oder ein Seilzug ist.

10. Sicherheitssystem (50) zur Sicherung einer Anlage (58), wobei das Sicherheitssystem (50) eine Betätigungsvorrichtung (10) nach einem der Ansprüche 1 bis 7; und eine Sicherheitssteuerung (52) zum Überführen der Anlage (58) in einen sicheren Zustand in Reaktion auf eine Betätigung des Betätigungselements (12) der Betätigungsvorrichtung (10) aufweist.

11. Sicherheitssystem (50) nach Anspruch 10, wobei die Sicherheitssteuerung (52) dazu eingerichtet ist, wenn eine Betätigung des Betätigungselements (12) erfasst wird, zumindest einen Teil der Anlage (58) abzuschalten, insbesondere wobei ein Teil der Anlage (52) abgeschaltet wird, in dem der Betätigungsort liegt.

12. Sicherheitssystem (50) nach Anspruch 10 oder 11, wobei das Sicherheitssystem (50) des Weiteren eine Ausgabeeinrichtung (54) zum Ausgeben des Betätigungsortes der erfassten Betätigung des Betätigungselements (12) aufweist.

13. Verfahren (70) zur Sicherung einer Anlage (58), mit den folgenden Schritten:
- Erfassen (72) einer Betätigung eines Betätigungselements (12) mittels einer Betätigungserfassungseinrichtung (14), wobei sich das Betätigungselement (12) in einer Längsrichtung (30) erstreckt;
- Bestimmen (74) eines Betätigungsorts der erfassten Betätigung in der Längsrichtung (30) mittels einer Betätigungsortbestimmungseinrichtung (16), wobei eine Signalerzeugungseinheit (22) der Betätigungsortbestimmungseinrichtung (16) ein Signal auf dem Betätigungselement (12) entlang der Längsrichtung erzeugt, wobei eine Signalerfassungseinheit (24) der Betätigungsortbestimmungseinrichtung (16) das erzeugten Signal während der Betätigung erfasst, wobei eine Verarbeitungseinheit (26) der Betätigungsortbestimmungseinrichtung (16) eine Signalcharakteristik des erfassten Signals bestimmt und den Betätigungsort basierend auf der bestimmten Signalcharakteristik bestimmt; und
- Überführen (76) der Anlage (58) mittels einer Sicherheitssteuerung (52) in einen sicheren Zustand in Reaktion auf eine Betätigung des Betätigungselements (12).

14. Verfahren nach Anspruch 13, wobei das Verfahren des Weiteren den folgenden Schritt aufweist:
- Ausgeben (78) des Betätigungsorts der erfassten Betätigung mittels einer Ausgabeeinrichtung (54).
